# EUROPÄISCHE PATENTSCHRIFT

(11) **EP 2 030 749 B1**
(45) Veröffentlichungstag und Bekanntmachung des Hinweises auf die Patenterteilung: **20.03.2013**
(21) Anmeldenummer: 08014926.3
(22) Anmeldetag: 22.08.2008
(51) Int. Cl.: B29B 17/00, D02G 3/00, D01F 6/90, B32B 27/08

(54) **Verfahren zur Herstellung von Spinn- und Stapelfasern aus Verbundfolienstücken**
Method for manufacturing spun fibres and staple fibres from compound film pieces
Procédé de fabrication de fibres à tisser et à empiler comprenant des pièces de feuilles composites

(30) Priorität: 31.08.2007 DE 102007041297
(43) Veröffentlichungstag der Anmeldung: 04.03.2009
(73) Patentinhaber: Interseroh Dienstleistungs GmbH, 51149 Köln (DE)
(72) Erfinder: Hodrius, Norbert, 40547 Düsseldorf (DE)
(74) Vertreter: Thoma, Michael

(56) Entgegenhaltungen:
- EP-A1- 0 583 595
- EP-A1- 0 984 087
- DE-A1- 4 221 681
- DE-A1- 19 542 666
- DE-A1- 19 837 682
- JP-A- 3 237 143
- JP-A- 5 105 731
- US-A- 6 090 494

## Beschreibung

Die vorliegende Erfindung betrifft ein Verfahren zur Herstellung von Spinnund/oder Stapelfasern aus mehrlagigen Verbundfolienstücken.

In der Abfallwirtschaft ist besonders das Recycling von mehrlagigen Verbundfolien ein besonderes Problem, da sich die Verbundfolien aufgrund ihrer verschiedenen Materialien, die sie enthalten, nur schwer in sinnvolle Produkte weiter verarbeiten lassen. Problematisch ist hierbei zum einen die Verwendung unterschiedlicher Folienlagen aus verschiedenen Materialien, andererseits aber auch die Verwendung der die Folienlagen verbindenden Zwischenschichten, die oftmals mit den Folienschichten nicht verschmelzbare Klebstoffe und dergleichen enthalten. Da die Verbundfolien beispielsweise im Lebensmittelbereich oft unterschiedlichen Anforderungen gerecht werden müssen, so z.B. einerseits eine hohe Reißfestigkeit aufweisen müssen, andererseits eine Gasdichtheit sichergestellt werden muss, werden für die verschiedenen Schichten solcher mehrlagiger Folien oft Folienschichten aus hinsichtlich ihrer chemischer Eigenschaften sehr verschiedenen Materialien verwendet.

Um der sich hieraus ergebenden Problematik zu begegnen, ist es bekannt, derartige Verbundfolien in einem recht aufwändigen Prozess in ihre Bestandteile zu zerlegen. So werden Foliencoils zunächst über mehrere Stunden in eine chemische Lösung eingelegt, die die Verbundstoffe zwischen den Folienlagen löst bzw. zumindest anlöst. Anschließend werden die Folienlagen im ausgebreiteten Zustand voneinander mechanisch abgezogen, was bisweilen sogar von Hand bewerkstelligt wird. Es versteht sich, dass dieser Prozess einerseits wenig wirtschaftlich und andererseits gesundheitlich bedenklich ist.

Die Schrift EP 0 583 595 A1 beschreibt ein Recycling-Verfahren für PE/PA-Verbundfolien zu Legierungen, die eine hohe Schlagzähigkeit aufweisen. Zu diesem Zweck werden die zu recycelnden Verbundfolienabfälle insbesondere mit großen Mengen an Polyamid-Neumaterial Füllstoffen vermischt. Als Verträglichkeitsvermittler werden dabei insbesondere Polyethylene verschiedenen Molekulargewichts zugegeben, die entweder durch Pfropfung von Polyethylen oder durch Copolymerisation von Ethylen mit anderen reaktiven Monomeren mit gegenüber PAreaktiven Gruppen ausgerüstet werden.

Ferner beschreibt die DE 198 37 682 A1 ein Verfahren zur Online-Verarbeitung von Altkunststoffen, wobei aus Verschnitten von PE/PA-Verbundfolien ein homogenes Regranulat gewonnen wird. Dabei werden die zu behandelnden Verbundfolienstücke nach deren Zerkleinerung unter in Erdgas-Atmosphäre extrudiert, wobei es unerheblich sein soll, ob Additive oder Modifikatoren eingesetzt werden.

Die Schrift JP 03 237143 beschreibt ferner ein Verfahren zum Recycling von transparenten Verbundfolien umfassend PE- und Nylon-Schichten, wobei Verbundfolienstücke mit niedrig molekularem Polyethylen vermischt werden.

Die US 6090494 offenbart ein Verfahren zum Verspinnen von Recycling Kunststoffen aus Folienresten. Hiervon ausgehend liegt der vorliegenden Erfindung die Aufgabe zugrunde, ein verbessertes Verfahren der eingangs genannten Art zu schaffen, das Nachteile des Standes der Technik vermeidet und Letzteren in vorteilhafter Weise weiterbildet. Insbesondere sollen die Verbundfolien in einem wirtschaftlich effizienten Prozess

zu einem sinnvoll weiter zu verwendenden und eine Werkschöpfung mit sich bringenden Werkstoff verarbeitet werden, der mechanisch hochwertige Eigenschaften besitzt.

Diese Aufgabe wird erfindungsgemäß für ein Verfahren zur Herstellung von Spinnund/oder Stapelfasern gemäß Anspruch 1 gelöst. Bevorzugte Ausgestaltungen der Erfindung sind Gegenstand der abhängigen Ansprüche.

Es wird also vorgeschlagen, die Inkompatibilitäten der verschiedenen Werkstoffe von Verbundfolien durch eine thermische Behandlung und Zugabe eines Additivs für die Weiterverarbeitung in ausreichender Weise zu beseitigen und aus dem sich ergebenden Polymergemisch hochwertige Spinnfasern bzw. Stapelfasern zu erzeugen. Erfindungsgemäß ist hierzu vorgesehen, dass die mehrlagigen Verbundfolienstücke enthaltend zumindest eine Folienlage aus Polyamid und/oder Polyethylen mittels einer Granuliervorrichtung zu einem Granulat verarbeitet werden, dass das Granulat zu einer Polymerschmelze aufgeschmolzen und die Polymerschmelze zu Spinn- und/oder Stapelfasern versponnen wird, wobei dem Granulat und/oder der Polymerschmelze ein Additiv enthaltend ein auf einem Polyolefin und/oder einem Polyolefin-Copolymer basierender, extrusionsfähiger Haftvermittler in einem Gewichtsanteil von 0,5 % bis 25 % bezogen auf das Granulat- bzw. Polymerschmelzegewicht zugegeben wird. Die Zugabe des genannten Additivs erfolgt hierbei vor dem Verspinnen bei einer das Additiv aktivierenden Temperatur, das in der Polymerschmelze makromolekulare Veränderung bewirkt. Die Erfindung geht dabei von der Vorstellung aus, dass die Zugabe des Additivs in Verbindung mit der Temperaturbehandlung des Polymer-Additiv-Gemischs die in der Polymerschmelze enthaltenden, an sich inkompatiblen Moleküle, insbesondere die aus den Barriereschichten der Verbundfolie herstammenden Moleküle, in Form von Partikeln neutralisiert, indem die Partikel von dem Additiv umschlossen werden, so dass die an sich mit dem Polymer bzw. den Copolymeren aus den Folienschichten eine die mechanischen Eigenschaften von Spinnfasern ausreichend sicherstellende Bindung eingeht.

In vorteilhafter Weiterbildung der Erfindung wird dabei das Polymer-Additiv-Gemisch einer Druck- und Temperaturbehandlung mit einer Prozesstemperatur von mindestens 180°C unterworfen, wobei die Prozesstemperatur über eine ausreichende Zeit vorzugsweise zwischen 200°C und 350°C, insbesondere etwa zwischen 250°C und 275°C gehalten wird. Die Dauer der Temperaturbehandlung kann hierbei grundsätzlich variieren. Je nach Mischungsverhältnis und Additivanteil können einige Sekunden ausreichend sein, aber auch mehrere Minuten sinnvoll sein, um eine ausreichende Homogenisierung der Molekülmasse und ein ausreichendes Umschließen der zu kompatibilisierenden Moleküle mit dem Additiv zu gewährleisten.

Um hinsichtlich der von dem Additiv zu bindenden Partikel eine möglichst geringe Partikelgröße zu erzielen, was den mechanischen Eigenschaften der zu erzeugenden Spinn- bzw. Stapelfasern zugute kommt, wird in vorteilhafter Weise ein Additiv mit speziellen Eigenschaften verwendet. Insbesondere wird als Additiv ein Haftvermittler bestehend aus einem modifizierten Polyolefin basierend auf Polyethylen und/oder Polypropylen verwendet, das die Haftvermittlung bewirkende funktionale Gruppen enthält. Hierbei hat es sich als besonders vorteilhaft erwiesen, wenn der verwendete Haftvermittler einen Schmelzpunkt im Bereich von 100°C bis 150°C, vorzugsweise etwa 120°C aufweist und eine Erweichungstemperatur bzw. Vicattemperatur im Bereich zwischen 80°C bis 120°C, vorzugsweise etwa 100°C besitzt. Eine gute Durchmischung von Additiv und Polymer und hierdurch eine besonders gute Wirkung des Additivs ergibt sich dann, wenn das verwendete Additiv einen Schmelzindex (MFR = Melt Flow Rate) im Bereich von 1 bis 2 g/10 Min., vorzugweise etwa 1,5 bis 1,7 g/10 Min. besitzt.

Grundsätzlich kann das Polymer-Additiv-Gemisch, das der genannten Druck- und Temperaturbehandlung unterworfen wird, auf verschiedene Weise hergestellt werden. Überraschenderweise hat es sich bezüglich einer hohen mechanischen Festigkeit der zu erzeugenden Spinnfasern als besonders günstig erwiesen, wenn das dann zu der Polymerschmelze verarbeitete Granulat in einem mehrstufigen, insbesondere zweistufigen Granulierprozess gewonnen wird. Vorteilhafterweise wird zunächst in einem ersten Granulierschritt aus den Verbundfolienstücken ein additivfreies Vorgranulat erzeugt. In einem zweiten Granulierschritt wird dieses Vorgranulat sodann nach Zugabe bzw. unter Zugabe des Additivs zu einem dann spinnfaserfähigen Granulat verarbeitet.

Vorteilhafterweise werden die beiden Granulierprozesse dabei mit unterschiedlichen Granuliervorrichtungen durchgeführt. Der erste Granulierschritt zur Erzeugung des Vorgranulats kann in effizienter Weise mittels einen Einschnecken-Extruders bewerkstelligt werden, der die Verbundfolienstücke zu dem additivfreien Vorgranulat extrudiert.

In vorteilhafter Weise wird hingegegen das spinnfaser- bzw. stapelfaserfähige Granulat der Zugabe des Additivs bzw. unter Zugabe des Additivs mittels eines Mehrschnecken-Extruders, insbesondere eines Zweischnecken-Extruders durch Extrusion granuliert. Die Verwendung eines Mehrschnecken-Extruders stellt eine besonders gute Homogenisierung des Polymer-Additiv-Gemischs sicher, wodurch ein hoher Wirkungsgrad des Additivs erzielt wird.

Alternativ könnte zum Granulieren des spinn- bzw. stapelfaserfähigen Granulats auch ein Einschnecken-Extruder ggf. Verwendung finden, wobei dann vorteilhafterweise ein Vormischer zur Erzielung der notwendigen Homogenisierung verwendet wird. Ein solcher Vormischer kann auch bei Verwendung des bevorzugten Zweischnecken-Extruders Verwendung finden, um eine zusätzliche Homogenisierung zu erreichen.

In Weiterbildung der Erfindung wird dabei beim Granulieren des Polymer-Additiv-Gemischs eine Entgasung des Materials vorgenommen. Insbesondere kann dem bevorzugten Doppelschnecken-Extruder eine Mehrfachentgasung zugeordnet sein, um dem Materialgemisch Feuchtigkeit zu entziehen, was sich vorteilhaft auf die Materialeigenschaften des spinnfaserfähigen Materials und insbesondere auch der dann hergestellten Spinnfasern auswirkt.

Die Weiterverarbeitung des mit dem Additiv versetzten Materials zu Spinnfasern bzw. Stapelfasern kann grundsätzlich unter verschiedenen Prozessparametern durchgeführt werden, die je nach Anwendungsfall an die Materialzusammensetzung angepasst werden können. Als besonders vorteilhaft hat es sich hierbei erwiesen, wenn die Polymerschmelze bei einer Temperatur zwischen 200°C und 350°C, vorzugsweise 230°C bis 300°C und insbesondere etwa 250°C zu den Fasern verarbeitet wird. Bei diesen Temperaturen wird sichergestellt, dass das Additiv seine kompatibilisierende Wirkung auch in den gesponnenen Fasern entwickelt.

Um besonders hochwertige Fasern zu erhalten, werden in vorteilhafter Weise die Verbundfolienstücke mittels einen Homogenisierungssilos oder einer anderen geeigneten Homogenisierungsvorrichtung hinsichtlich ihrer Materialzusammensetzung derart abgestimmt, dass die Gesamtheit der verarbeiteten Verbundfolienstücke einer Charge einen Polyamidgehalt von zumindestens 40 % bezogen auf das Gesamtgewicht aller Verbundfolienstücke einer Charge umfassen. Vorteilhafterweise kann die Verbundstolienstücke-Masse einen Anteil an Polyamid zwischen 50 Gewichtsprozent und 90 Gewichtsprozent, vorteilhafterweise 50 bis 70 Gewichtsprozent Polyamid enthalten.

Je nach verarbeiteten Verbundfolienstücken kann der gewichtsanteilsmäßige Rest der Verbundfolienstücke HDPE (High Density Polyethylen), LDPE (Low Density Polyethylen), Polypropylen, Polyethylenterephthalat, Polyethylen und/oder ein Ethylenvinylalkoholcopolymer EVOH enthalten, vorzugsweise aus diesen Materialien von anteilsmäßig geringen Spuren weiterer Elemente abgesehen bestehen.

Die Erfindung wird nachfolgend anhand eines bevorzugten Ausführungsbeispiels und zugehöriger Zeichnungen näher erläutert. In der Zeichnung zeigt:

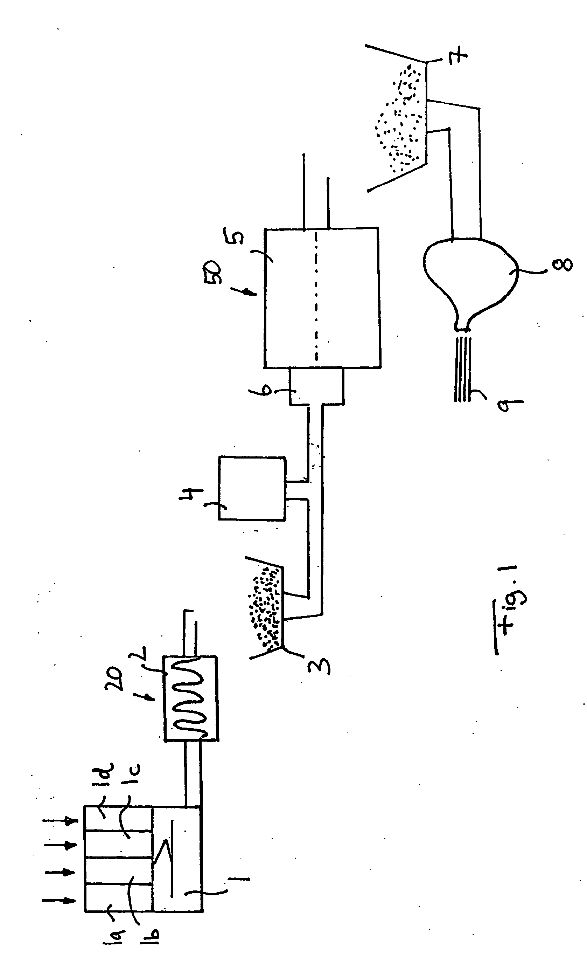

- Fig. 1: eine schematische, den Ablauf des Herstellungsprozesses verdeutlichende Darstellung einer Anlage zur Erzeugung eines spinnfaserfähigen Materials aus mehrlagigen Verbundfolien und der weiteren Herstellung von Spinnfasern hieraus.

Bei dem in Fig. 1 gezeichneten Ausführungsbeispiel werden in einem Homogenisierungssilo verschiedene Verbundfolienstücke-Chargen 1 a, 1b, 1 c und 1 d, die verschieden aufgebaute bzw. zusammengesetzte Verbundfolienstücke enthalten können, derart abgezogen, dass die der weiteren Verarbeitung zugeführten Verbundfolienstücke eine geeignete Materialzusammensetzung besitzen. Insbesondere kann mittels des Homogenisierungssilos 1 eine Verarbeitungscharge von Verbundfolienstücken bereit gestellt werden, die mindestens 50 Gewichtsprozent Polyamid enthält. Der Polyamidanteil ergibt sich hierbei aus den Polyamidfolienlagen der mehrlagigen Verbundfolien, während weitere Materialbestandteile wie HDPE, LDPE, PP, PE, PET oder EVOH aus den weiteren Folienschichten stammen können. Insbesondere können Verbundfolien aus PA/HDPE, PA/LDPE, PA/PP, PET/PE oder aus PA/EVOH verarbeitet werden. Die mittels des Homogenisierungssilos 1 hinsichtlich ihrer Materialzusammensetzung passen zusammengestellten Verbundfolienstücke können, ohne das dies in Fig. 1 eigens gezeigt wäre, vorher in einem Stopfwerk aus Folienabfällen bzw. -abschnitten oder -resten zusammengestellt worden sein, wobei sowohl bedruckte als auch unbedruckte Verbundfolien verarbeitet werden können. Es versteht sich, dass auch einlagige Verbundfolienstücke zugegeben werden können.

Wie Fig. 1 zeigt, wird sodann in einem ersten Granulierstück aus den Verbundfolienstücken ein Vorgranulat hergestellt, was vorteilhafterweise mittels eines Einschnecken-Extruders 2 bewerkstelligt werden kann.

Das noch additivfreie Vorgranulat wird sodann aus einem Zwischenspeicher 3 abgezogen und mit einem Additiv der zuvor genannten Art, das aus einem Additivtank 4 zugegeben wird, vermischt und einer zweiten Granuliervorrichtung 50 zugeführt, wobei in der gezeichneten Ausführung der zweiten Granuliervorrichtung 50 noch ein Vormischer 6 vorgeschaltet ist, um das Polymervorgranulat-Additiv-Gemisch noch vor dem eigentlichen Granuliervorgang 50 besser zu homogenisieren. Im Gegensatz zu der ersten Granuliervorrichtung 20 besteht die zweite Granuliervorrichtung 50 vorteilhafterweise aus einem Doppelschnecken-Extruder 5, der sich für den Verarbeitungsprozess des additivhaltigen Vorgranulat-Additiv-Gemischs als vorteilhaft erwiesen hat. Die zweite Granuliervorrichtung 50 wird dabei vorteilhafterweise derart ausgerüstet, ausgebildet und betrieben, beispielsweise durch Auswahl geeigneter Scheckensteigungen, geeigneter Lochplatten mit geeigneten Lochdurchmessern und -geometrien sowie Beheizung oder anderer Prozessparameter, dass das Polymer-Additiv-Gemisch einer Druck- und Temperatur unterworfen wird, die das zugegebene Additiv aktiviert und eine makromolekulare Veränderung des Materials bewirkt. Insbesondere hat es sich als vorteilhaft erwiesen, wenn das Polymer bei der zweiten Granulierverarbeitung mit einer Prozesstemperatur von etwa 250°C bis 270°C gefahren wird.

Durch die im zweiten Granulierschritt erfolgende Temperaturbehandlung in Verbindung mit der Zugabe des Additivs wird sodann das spinnfähige Material in Form von Granulat erhalten, das in der gezeichneten Ausführung in einem zweiten Zwischenspeicher 7 zwischengelagert wird, bevor es dann in einer geeigneten Spinnvorrichtung 8 zu Spinnfasern 9 weiterverarbeitet wird. Die eingangs erläuterten, die Eigenschaften der Spinnfasern begünstigenden Eigenschaften des Additivs vereint beispielsweise der Polyolefin-basierte funktionale Gruppen aufweisende Haftvermittler der Fa. Mitsui Chemicals, der unter dem Markennamen Admer NF408E im Handel erhältlich ist.

## Patentansprüche

1. Verfahren zur Herstellung von Spinn- und/oder Stapelfasern (9),
**dadurch gekennzeichnet,**
**dass** bei dem Verfahren mehrlagige Verbundfolienstücke enthaltend zumindest eine Folienlage aus Polyamid und/oder Polyethylen mittels einer Granuliervorrichtung (20, 50) zu einem Granulat verarbeitet werden, das Granulat zu einer Polymerschmelze geschmolzen wird, und die Polymerschmelze zu Spinn- und/oder Stapelfasern versponnen wird, wobei dem Granulat und/oder der Polymerschmelze ein Additiv enthaltend einen auf einem Polyolefin und/oder einem Polyolefin-Copolymer basierenden, extrusionsfähigen Haftvermittler in einem Gewichtsanteil von 0,5 % bis 25 % bezogen auf das Granulat- oder Polymerschmelzegewicht zugegeben wird.

2. Verfahren nach dem vorhergehenden Anspruch, wobei das Polymer-Additiv-Gemisch einer Druck- und Temperaturbehandlung mit einer Prozesstemperatur von mehr als 180°C, vorzugsweise zwischen 200°C und 350°C, insbesondere etwa 240°C bis 280°C, zur makromolekularen Veränderung des Polymergemischs unterzogen wird.

3. Verfahren nach einem der vorhergehenden Ansprüche, wobei das zur Polymerschmelze verarbeitete Granulat in einem mehrstufigen Granulierprozess gewonnen wird, wobei zunächst die Verbundfolienstücke zu einem additivfreien Vorgranulat granuliert werden, das sodann nach und/oder unter Zugabe des Additivs zu einem additivhaltigen, spinnfaserfähigen Granulat verarbeitet wird.

4. Verfahren nach dem vorhergehenden Anspruch, wobei das Vorgranulat und das additivhaltige spinnfaserfähige Granulat mittels unterschiedlich ausgebildeter Granuliervorrichtungen (20, 50) gewonnen wird.

5. Verfahren nach einem der beiden vorhergehenden Ansprüche, wobei das Vorgranulat mittels eines Einschnecken-Extruders extrudiert wird.

6. Verfahren nach einem der drei vorhergehenden Ansprüche, wobei das additivhaltige spinnfaser- oder stapelfaserfähige Granulat mittels eines Zweischnecken-Extruders gewonnen wird.

7. Verfahren nach einem der vorhergehenden Ansprüche, wobei das Polymer-Additiv-Gemisch vor seiner Granulierung in einem Vormischer (6) vorgemischt wird.

8. Verfahren nach einem der vorhergehenden Ansprüche, wobei die Polymerschmelze bei einer Temperatur zwischen 200°C und 350°C, vorzugsweise 230°C bis 300°C zu den Fasern versponnen wird.

9. Verfahren nach einem der vorhergehenden Ansprüche, wobei die Verbundfolienstücke hinsichtlich ihrer Materialzusammensetzung, vorzugsweise mittels eines Homogenisierungssilos (1), derart eingestellt werden, dass die Verbundfolienstücke in ihrer Gesamtheit betrachtet mehr als 40 %, vorzugsweise zwischen 50 und 70 Gewichtsprozent, Polyamid enthalten.

10. Verfahren nach dem vorhergehenden Anspruch, wobei der gewichtsanteilsmäßige Rest der Verbundfolienstücke HDPE, LDPE, PP, PET, PE und/oder EVOH enthält.

11. Verfahren nach einem der vorhergehenden Ansprüche, wobei das Additiv den Verbundfolienstücken oder einem daraus hergestellten Zwischenprodukt vor Zuführung in die Granuliervorrichtung und/oder in der Granuliervorrichtung zugegeben wird, so dass ein das Additiv enthaltendes Granulat erzeugt wird.

## Claims

1. A method of manufacturing spinning fibres and/or staple fibres (9), **characterized in that**
in the method multilayer composite film pieces containing at least one film layer of polyamide and/or polyethylene are processed by means of a granulation apparatus (20, 50) to form a granulate, the granulate is melted to form a polymer melt and the polymer melt is spun to spinning fibres and/or staple fibres, wherein an additive containing an extrudable adhesion promoter based on a polyolefin and/or on a polyolefin copolymer is added to the granulate and/or the polymer melt with a percentage by weight of 0.5% to 25% relative to the weight of the granulate or polymer melt.

2. A method in accordance with the preceding claim, wherein the polymer additive mixture is subjected to a pressure and temperature treatment at a process temperature of more than 180°C, preferably between 200°C and 350°C, in particular approximately 240°C to 280°C, for a macromolecular modification of the polymer mixture.

3. A method in accordance with one of the preceding claims, wherein the granulate processed to form a polymer melt is obtained in a multistage granulation process, wherein first the composite film pieces are granulated to form an additive-free pregranulate which is then processed, after and/or while adding the additive, to form a granulate containing additive and capable of forming spinning fibre.

4. A method in accordance with the preceding claim, wherein the pregranulate and the granulate containing additive and capable of forming spinning fibre is obtained by means of differently configured granulation apparatus (20, 50).

5. A method in accordance with one of the two preceding claims, wherein the pregranulate is extruded by means of a single-screw extruder.

6. A method in accordance with one of the three preceding claims, wherein the granulate containing additive and capable of forming spinning fibre or staple fibre is obtained by means of a twin-screw extruder.

7. A method in accordance with one of the preceding claims, wherein the polymer additive mixture is premixed in a premixer (6) before its granulation.

8. A method in accordance with one of the preceding claims, wherein the polymer melt is spun to form the fibres at a temperature between 200°C and 350°C, preferably 230°C to 300°C.

9. A method in accordance with one of the preceding claims, wherein the composite film pieces are set with respect to their material composition, preferably by means of a homogenising silo (1), such that the composite film pieces contain, considered in their entirety, more than 40%, preferably between 50 and 70% by weight polyamide.

10. A method in accordance with the preceding claim, wherein the remainder of the composite film pieces by weight percent contains HDPE, LDPE, PP, PET, PE and/or EVOH.

11. A method in accordance with one of the preceding claims, wherein the additive is added to the composite film pieces or to an intermediate product manufactured therefrom before supply to the granulation apparatus and/or is added in the granulating apparatus so that a granulate containing the additive is produced.

## Revendications

1. Procédé destiné à la fabrication de fibres textiles et/ou artificielles discontinues (9),
**caractérisé en ce que**,
lors du procédé, des morceaux de feuille composée multicouche comprenant au moins une couche de feuille en polyamide et/ou en polyéthylène sont transformés en un granulé au moyen d'un dispositif de granulation (20, 50), **en ce que** le granulé est fondu en une masse fondue de polymère, et **en ce que** la masse fondue de polymère est filée pour donner des fibres textiles et/ou artificielles discontinues, un agent adhésif apte à l'extrusion basé sur une polyoléfine et/ou un copolymère de polyoléfine contenant un additif étant additionné au granulé et/ou à la masse fondue de polymère avec une proportion de poids de 0,5 % à 25 % par rapport au poids du granulé ou au poids de la masse fondue de polymère.

2. Procédé selon la revendication précédente, le mélange d'additif et de polymère étant soumis à un traitement à température et sous pression avec une température de processus de plus de 180 °C, de préférence entre 200 °C et 350 °C, notamment d'environ 240 °C à 280 °C pour la modification macromoléculaire du mélange polymérique.

3. Procédé selon une quelconque des revendications précédentes, le granulé transformé en masse fondue de polymère étant obtenu au cours d'un processus de granulation à plusieurs niveaux, les morceaux de morceaux de feuille composée étant granulés d'abord en un granulé préliminaire sans additif, qui est transformé ensuite après et/ou pendant l'addition de l'additif en un granulé contenant de l'additif et apte au filage.

4. Procédé selon la revendication précédente, le granulé préliminaire et le granulé apte au filage contenant de l'additif étant obtenus au moyen de dispositifs de granulage (20, 50) constitués différemment.

5. Procédé selon une quelconque des deux revendications précédentes, le granulé préliminaire étant extrudé au moyen d'une extrudeuse à une vis.

6. Procédé selon une quelconque des trois revendications précédentes, le granulé apte au filage ou à la fabrication de fibres artificielles discontinues contenant de l'additif étant extrudé au moyen d'une extrudeuse à deux vis.

7. Procédé selon une quelconque des revendications précédentes, le mélange d'additif et de polymère étant prémélangé avant sa granulation dans une prémélangeuse (6).

8. Procédé selon une quelconque des revendications précédentes, la masse fondue de polymère étant filée pour donner les fibres à une température entre 200 °C et 350 °C, de préférence de 230 °C à 300 °C.

9. Procédé selon une quelconque des revendications précédentes, les morceaux de morceaux de feuille composée étant configurés par rapport à leur composition matérielle de préférence au moyen d'un silo d'homogénéisation (1) de sorte que les morceaux de morceaux de feuille composée comportent, considérés dans leur totalité, plus de 40 %, de préférence entre 50 et 70 pour cent de poids de polyamide.

10. Procédé selon une quelconque des revendications précédentes, le reste de la proportion de poids des morceaux de feuille composée comportant du PEHD, du PEBD, du PP, du PET, du PE et/ou de l'EVOH.

11. Procédé selon une quelconque des revendications précédentes, l'additif étant additionné aux morceaux de feuille composée ou à un produit intermédiaire fabriqué à partir de celles-ci avant l'introduction dans le dispositif de granulation et/ou dans le dispositif de granulation, de sorte qu'un granule comportant l'additif est produit.
